# FASCICULE DE BREVET EUROPEEN

(11) **EP 3 834 127 B1**
(45) Date de publication et mention de la délivrance du brevet: **05.03.2025**
(21) Numéro de dépôt: 19748546.9
(22) Date de dépôt: 05.08.2019
(51) Int. Cl.: H04N 7/18, G06V 20/20, B64D 47/08, H04N 21/81

(54) **PROCÉDÉ D'ACQUISITION ET DE DIFFUSION D'UNE VIDÉO ENRICHIE D'AU MOINS UNE INFORMATION CONTEXTUELLE ET DISPOSITIF POUR SA MISE EN OEUVRE**
VERFAHREN ZUM ERFASSEN UND SENDEN EINES MIT MINDESTENS EINER KONTEXTINFORMATION ERWEITERTEN VIDEOS UND VORRICHTUNG ZUR IMPLEMENTIERUNG DAVON
METHOD FOR ACQUIRING AND TRANSMITTING A VIDEO ENRICHED WITH AT LEAST ONE CONTEXTUAL INFORMATION AND DEVICE FOR IMPLEMENTING IT

(30) Priorité: 08.08.2018 FR 1857376
(43) Date de publication de la demande: 16.06.2021
(73) Titulaire: T.D.M., 33700 Merignac (FR)
(72) Inventeur: VINCENS DE TAPOL, Marc, 33800 BORDEAUX (FR)
(74) Mandataire: Fantin, Laurent
(86) Numéro de dépôt international: PCT/EP2019/071044
(87) Numéro de publication internationale: WO 2020/030604

(56) Documents cités:
- FR-A1- 3 034 899
- GB-A- 2 455 837
- US-A1- 2002 093 564
- US-A1- 2005 278 753
- GARMIN: "Cameras | VIRB | Garmin", 28 July 2018 (2018-07-28), XP055585384, Retrieved from the Internet <URL:http://web.archive.org/web/20180728230019/explore.garmin.com/en-US/virb/> [retrieved on 20190503]

## Description

La présente demande se rapporte à un procédé d'acquisition et de diffusion d'une vidéo enrichie d'au moins une information contextuelle ainsi qu'à un dispositif pour sa mise en œuvre. Selon une application, cette vidéo est destinée aux passagers d'un avion pour assurer leur divertissement en vol.

Le document FR3034899 décrit un procédé et un dispositif pour permettre aux occupants d'un avion de visualiser l'environnement extérieur de l'avion. Selon ce document, le dispositif comprend plusieurs caméras, positionnées sur la paroi externe de l'avion, un serveur central configuré pour recevoir des données de navigation avionique provenant des systèmes avioniques de l'avion et des signaux vidéos provenant des caméras, ainsi que des écrans positionnés dans la cabine de passagers de l'avion configurés pour recevoir des signaux vidéos provenant du serveur central. Pour chaque caméra, la vidéo est transmise au serveur central. Au niveau du serveur central, les données de navigation avionique sont alors incrustées dans la vidéo. La vidéo enrichie des données de navigation avionique est de transmise aux écrans. Au niveau de chaque écran, chaque passager peut visualiser l'angle de vue qu'il souhaite en choisissant la vidéo provenant de l'une ou l'autre des caméras.

Des caméras qui incluent un module de géolocalisation et qui incrustent les données de géolocalisation dans la vidéo avant de la transmettre sont aussi connues de l'art antérieur.

Ce mode de réalisation n'est pas pleinement satisfaisant pour les raisons suivantes :
- Généralement chacune des caméras est positionnée dans un dôme rapporté sur la paroi externe du fuselage. La présence de ces dômes, en saillie sur le fuselage, tend à impacter les performances aérodynamiques de l'avion.
- Les informations permettant d'enrichir les vidéos sont issues des équipements avioniques de l'avion, ce qui peut s'avérer problématique en terme de sécurité.
- Des étapes potentielles de compression et de décompression de la vidéo génèrent des problématiques de latence qui engendrent un décalage important entre les instants d'acquisition et de visualisation de la vidéo, rendant le dispositif incompatible avec des applications en temps réel.

La présente invention vise à remédier à tout ou partie des inconvénients de l'art antérieur.

A cet effet, l'invention a pour objet un procédé d'acquisition et de visualisation selon la revendication 1.

Le fait d'incruster les informations contextuelles avant toute compression de la vidéo acquise par le système d'acquisition permet de solutionner les problèmes de latence. Selon une autre particularité, les informations contextuelles sont fournies par le système d'acquisition et non par l'un des systèmes avioniques de l'avion ce qui permet d'obtenir une ségrégation entre les données utilisées pour le divertissement des passagers et celles utilisées pour le vol de l'avion.

L'invention a également pour objet un aéronef selon la revendication 2.

D'autres caractéristiques et avantages ressortiront de la description de l'invention qui va suivre, description donnée à titre d'exemple uniquement, en regard des dessins annexés parmi lesquels :
- La figure 1 est une vue latérale d'un avion qui illustre un mode de réalisation de l'invention,
- La figure 2 est une représentation schématique d'un écran,
- La figure 3 est une représentation schématique d'un dispositif d'acquisition et de visualisation d'une vidéo enrichie d'au moins une information contextuelle qui illustre un mode de réalisation de l'invention, et
- La figure 4 est une représentation schématique d'un système d'acquisition qui illustre un mode de réalisation de l'invention.

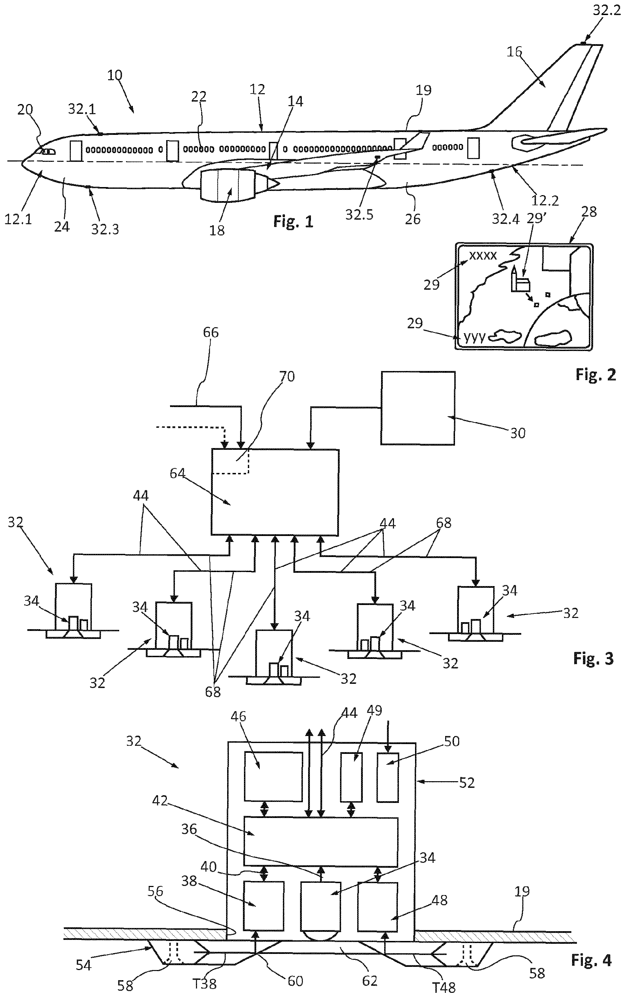

Sur la figure 1, on a représenté un avion 10 comprenant :
- un fuselage 12 qui s'étend entre une point avant 12.1 et une pointe arrière 12.2,
- une voilure 14 positionnée de part et d'autre du fuselage 12,
- un empennage 16 positionné au niveau de la pointe arrière 12.2 du fuselage 12, et
- plusieurs nacelles 18 à l'intérieur de chacune desquelles est positionné un moteur relié par un mât à la voilure 14.

Le fuselage 12, la voilure 14, l'empennage 16, les nacelles 18, les mâts comprennent une paroi externe 19 (visible sur la figure 4), également appelée peau, qui forme la surface aérodynamique de l'avion 10.

L'intérieur du fuselage est scindé en plusieurs zones qui comprennent, au-dessus d'un plancher médian, une cabine de pilotage 20 (ou cockpit) positionnée au niveau de la pointe avant 12.1, une cabine de passagers 22 positionnée à l'arrière de la cabine de pilotage 20 et, au-dessous du plancher médian, une soute avionique 24 positionnée au niveau de la pointe avant 12.1 ainsi qu'une soute à bagages 26 positionnée à l'arrière de la soute avionique 24.

Pour la présente demande, on entend par une vidéo un flux d'images qui peut être limité à une seule image.

L'avion 10 est équipé d'un dispositif d'acquisition et de visualisation d'au moins une vidéo enrichie d'au moins une information contextuelle qui comprend au moins un écran 28 configuré pour recevoir au moins un signal vidéo, le décompresser si nécessaire et le visualiser. Selon une configuration, l'écran 28 est configuré pour recevoir plusieurs signaux vidéo. L'écran 28 comprend un système de décompression des signaux vidéo reçus et au moins une commande pour permettre de sélectionner les signaux vidéo, de modifier le mode d'affichage de la ou des vidéo(s).

Le dispositif d'acquisition et de visualisation d'au moins une vidéo enrichie d'au moins une information contextuelle 29 comprend généralement plusieurs écrans 28, chacun étant positionné à l'avant de chaque passager et relié par une liaison filaire ou sans fil à un serveur de divertissement 30.

Selon une configuration, le dispositif d'acquisition et de visualisation d'au moins une vidéo enrichie d'au moins une information contextuelle 29 utilise le système de divertissement en vol (ou IFE pour In Flight Entertainment en anglais) déjà présent dans la majorité des avions pour visualiser la ou les vidéo(s). Par conséquent, les écrans 28 et le serveur de divertissement 30 ne sont pas plus décrits car ils sont connus de l'homme du métier. Par ailleurs, l'invention n'est pas limitée à un écran fixé à un siège passager. Ainsi, un écran présent dans un casque de réalité augmentée ou celui d'un smartphone, d'une tablette ou tout autre appareil portatif pourrait être utilisé.

Le dispositif d'acquisition et de visualisation d'au moins une vidéo enrichie d'au moins une information contextuelle 29 comprend également au moins un système d'acquisition 32 d'au moins une vidéo, positionné au niveau de la paroi externe 19 de l'avion 10.

Selon un mode de réalisation illustré sur la figure 4, chaque système d'acquisition 32 comprend une caméra 34 configurée pour générer un signal vidéo natif 36 (non compressé), un module de géolocalisation 38 configuré pour générer un signal de géolocalisation 40 comportant au moins une donnée de géolocalisation et un module de traitement d'images 42 configuré pour recevoir le signal vidéo natif 36 et le signal de géolocalisation 40, mixer les signaux vidéo natif 36 et de géolocalisation 40 de manière à obtenir un signal vidéo enrichie 44 d'au moins une information contextuelle et compresser ce signal vidéo enrichie 44 de manière à le transmettre au serveur de divertissement 30.

Le module de géolocalisation 38 peut être configuré pour transmettre d'autres informations en plus des données de géolocalisation, comme par exemple la vitesse, l'altitude, le temps, .... Le module de géolocalisation 38 comprend une antenne T38. Le module de géolocalisation 38 n'est pas plus décrit car il est connu de l'homme du métier.

Le module de traitement d'images 42 peut comprendre d'autres fonctionnalités. Il peut par exemple intégrer un calculateur pour déterminer à partir des données contenues dans le signal de géolocalisation d'autres données comme par exemple la vitesse à partir des points de géolocalisation et du temps contenus dans le signal de géolocalisation 40.

Le module de traitement d'images 42 peut également comprendre un enregistreur pour mémoriser au moins une vidéo ou des données dans une mémoire.

Selon un mode de réalisation, le module de traitement d'images 42 se présente sous la forme d'un microprocesseur.

Les informations contextuelles ne sont pas limitées aux données de géolocalisation. Ainsi, une information contextuelle peut être un texte 29, un graphisme 29', une image et/ou une vidéo en lien avec un point d'intérêt (POI pour Point Of Interest en anglais), une caractéristique d'un point d'intérêt, une donnée relative à la scène filmée par la caméra 34 ou au vol de l'avion 10.

Quelles que soient sa nature et sa forme, une information contextuelle est une donnée qui évolue en fonction du déplacement de l'avion 10.

Selon une configuration, le système d'acquisition 32 comprend au moins une mémoire 46, reliée au module de traitement d'image 42, configurée pour stocker au moins une information contextuelle et/ou un module de communication 48, relié au module de traitement d'image 42, configuré pour télécharger au moins une information contextuelle.

Selon un mode de réalisation, la mémoire 46 est configurée pour stocker une base de données relatives à des points d'intérêt susceptibles d'être filmés par la ou les caméra(s) 34. Selon une application, pour chaque vol, une base de données relatives à des points d'intérêt susceptibles d'être filmés par la ou les caméra(s) 34 est téléchargée dans la mémoire 46.

Selon un mode de réalisation, le module de communication 48 est un module de communication 4G/5G configuré pour télécharger, lorsque l'avion est à portée d'un relais de communication terrestre 4G/5G, une base de données relatives à des points d'intérêt susceptibles d'être filmés par la ou les caméra(s) 34. Le module de communication 48 comprend une antenne T48.

Selon un mode de réalisation, le système d'acquisition 32 comprend au moins un capteur microsystème électromécanique 49 de type Mems tel qu'un gyroscopique, un accéléromètre, un capteur magnétique et/ou autre, configuré pour transmettre une information contextuelle au module de traitement d'images 42. Un tel capteur microsystème électromécanique 49 de type Mems permet d'ajuster les informations contextuelles sur la vidéo en fonction de l'orientation de l'avion 10.

Quel que soit le mode de réalisation, le système d'acquisition 32 comprend un module de fourniture d'au moins une information contextuelle (le module de géolocalisation 38, la mémoire 46, le module de communication 48, le capteur microsystème électromécanique 49 de type Mems), positionné à proximité de la caméra 34 c,6 avant de le compresser pour le transmettre à un écran 24 de visualisation. Selon un autre avantage, cet agencement permet d'obtenir une ségrégation des données entre les données avioniques de l'avion 10 utilisées pour le vol de l'avion et les informations contextuelles utilisées pour le divertissement des passagers.

Le système d'acquisition 32 peut comprendre d'autres éléments comme par exemple une alimentation 50, un système de régulation thermique, ...

Sur le plan structurel, le système d'acquisition 32 présente un corps 52 creux, par exemple cylindrique, contenant la caméra 34, le module de géolocalisation 38, le module de traitement d'images 42, la mémoire 46, le module de communication 48, l'alimentation 50 ainsi qu'une plaque avant 54, solidarisée à une extrémité du corps 52, comportant un bord périphérique formant une collerette tout autour du corps 52. Selon un mode d'implantation, la paroi externe 19 de l'avion comprend un orifice 56 ajusté à la section du corps 52, la plaque avant 54 étant plaquée contre la face extérieure de la paroi externe 19.

Compte tenu de la compacité du système d'acquisition 32, l'orifice 56 est suffisamment petit pour être positionné entre des raidisseurs de la paroi externe 19. Ainsi, il n'est pas nécessaire de modifier la structure de l'avion pour solidariser le système d'acquisition 32 à la paroi externe 19. Selon un mode de réalisation, le système d'acquisition 32 est fixé à la paroi externe 19 grâce à des fixations 58 traversant la plaque avant 54 et la paroi externe 19. D'autres moyens pourraient être envisagés pour solidariser le système d'acquisition à la paroi externe 19. La plaque avant 54 est suffisamment fine pour limiter l'impact sur les performances aérodynamiques de l'avion.

La plaque avant 54 comprend une ouverture 60 obturée par une optique 62 positionnée au droit de la caméra 34. L'optique 62 a une épaisseur inférieure à celle de la plaque avant 54 pour limiter les risques d'endommagement de l'optique 62. Selon une configuration, la plaque avant 54 a une forme d'anneau.

Selon une autre caractéristique, au moins une antenne T38, T48 du module de géolocalisation 38 et/ou du module de communication 48 est positionnée à l'extérieur de la paroi externe 19 de l'avion 10, intégrée dans la plaque avant 54. Selon un mode de réalisation, les deux antennes T38, T48 du module de géolocalisation 38 et du module de communication 48 sont intégrées à la plaque avant 54 du système d'acquisition 32, en périphérie de l'ouverture 60 prévue pour l'optique 62. Cette solution permet d'optimiser la réception des signaux. Selon cette configuration, la forme en anneau permet l'intégration des antennes T38, T48 du module de géolocalisation 38 et du module de communication 48 à l'extérieur de la paroi externe 19 de l'avion, assure la protection de l'optique 62 et la fixation du système d'acquisition 32. Sa faible épaisseur permet de limiter l'impact sur les performances aérodynamiques de l'avion 10.

Selon une autre caractéristique de l'invention, le procédé d'acquisition et de visualisation d'au moins une vidéo enrichie d'au moins une information contextuelle comprend :
- une étape d'acquisition d'une vidéo par au moins un système d'acquisition 32 de manière à générer un signal vidéo natif 36,
- une étape de fourniture d'au moins une information contextuelle par le système d'acquisition 32,
- une étape d'incrustation de l'information contextuelle dans la vidéo réalisée avant toute étape de compression du signal vidéo natif 36 de manière à obtenir une vidéo enrichie,
- une étape de compression de la vidéo enrichie de manière à générer un signal vidéo enrichie,
- une étape de transmission du signal vidéo enrichie vers au moins un écran 24, et
- une étape de visualisation de la vidéo enrichie sur l'écran 24.

Le fait de réaliser l'étape d'incrustation avant toute étape de compression du signal vidéo permet de minimiser la latence d'encodage et de pouvoir utiliser le dispositif d'acquisition et de visualisation d'au moins une vidéo enrichie d'au moins une information contextuelle dans des applications en temps réel.

Dans le cas d'une acquisition d'une vidéo d'un point d'intérêt, les informations relatives au point d'intérêt sont incrustées à la vidéo lors de l'apparition du point d'intérêt et ne sont plus incrustées lors de la disparition du point d'intérêt de la vidéo. Ainsi, l'étape d'incrustation d'au moins une information contextuelle relative à un point d'intérêt est synchronisée avec la présence du point d'intérêt dans la vidéo. Cette étape d'incrustation est assurée par le module de traitement d'images 42.

Selon une autre caractéristique de l'invention, le dispositif d'acquisition et de visualisation d'au moins une vidéo enrichie d'au moins une information contextuelle comprend un réseau de systèmes d'acquisition 32 répartis sur la paroi externe 19 de l'avion. Selon une configuration visible sur la figure 1, un premier système d'acquisition 32.1 est positionné sur la partie supérieure de la pointe avant 12.1 du fuselage 12, un deuxième système d'acquisition 32.2 est positionné sur la partie sommitale de l'empennage 16, un troisième système d'acquisition 32.3 est positionné sous la pointe avant 12.1 du fuselage 12, un quatrième système d'acquisition 32.4 est positionné sous la pointe arrière 12.2 du fuselage et un cinquième système d'acquisition 32.5 est positionné sous la voilure 14. Bien entendu, l'invention n'est pas limitée à cette configuration. Les systèmes d'acquisition sont positionnés en fonction des prises de vue souhaitées et pour limiter la perte pour simultanément tous les systèmes d'acquisition des signaux de géolocalisation émis par des satellites de géolocalisation.

Selon un autre avantage, le fait de prévoir plusieurs systèmes d'acquisition équipés chacun d'un module de communication 48 permet d'élargir la bande passante pour obtenir un débit de téléchargement plus important. Ainsi, les différents modules de communication 48 des différents systèmes d'acquisition 32 peuvent être utilisés pour assurer une connexion à l'Internet tant que l'avion reste à portée d'un relais de communication terrestre.

Selon une autre caractéristique de l'invention visible sur la figure 3, le dispositif d'acquisition et de visualisation d'au moins une vidéo enrichie d'au moins une information contextuelle comprend un commutateur réseau 64 auquel sont reliés les différents systèmes d'acquisition 32 et un serveur de divertissement 30 auquel sont reliés les différents écrans 28. Ce commutateur réseau 64 permet de renvoyer les différents signaux vidéo enrichie 44, provenant des différents systèmes d'acquisition 32 vers le serveur de divertissement 30. Ainsi, chaque passager peut sélectionner l'un des signaux vidéo enrichie afin de visualiser la vue qui l'intéresse. Selon l'invention, le commutateur réseau 64 permet aux systèmes d'acquisition 32 d'échanger leurs informations contextuelles. Ainsi, si un premier système d'acquisition perd les signaux de géolocalisation des satellites de géolocalisation ou ne capte plus les signaux d'un réseau de télécommunication terrestre, les données manquantes peuvent être fournies par un deuxième système d'acquisition au module de traitement d'images du premier système d'acquisition pour lui permettre de les incruster dans la vidéo acquise par la caméra du premier système d'acquisition.

Ainsi, le procédé d'acquisition et de visualisation d'au moins une vidéo enrichie d'au moins une information contextuelle comprend une étape d'échange entre les systèmes d'acquisition 32 des informations contextuelles acquises par chacun d'eux grâce au commutateur réseau 64.

Selon une configuration, le commutateur réseau 64 est alimenté par une alimentation électrique avion 66 et relié à chacun des systèmes d'acquisition 32 par un câble réseau 68.

Selon un mode de réalisation, le commutateur réseau 64 est de type POE (pour Power on Ethernet en anglais) et chaque câble réseau 68 est utilisé non seulement pour véhiculer les signaux vidéo enrichis ou tout autre signal mais également pour alimenter les différents systèmes d'acquisition 32. Selon ce mode de réalisation, le commutateur réseau 64 comprend un système de régulation 70 de l'alimentation électrique permettant d'alimenter les différents systèmes d'acquisition 32 en énergie électrique régulée. Ainsi, ce mode de réalisation permet de simplifier l'alimentation électrique des différents systèmes d'acquisition et le maintien de l'alimentation électrique des systèmes d'acquisition 32 durant les microcoupures de l'alimentation électrique avion afin de garantir un fonctionnement optimal des systèmes d'acquisition 32 et de protéger leurs composants électroniques.

## Revendications

1. Procédé d'acquisition et de visualisation d'au moins une vidéo enrichie d'au moins une information contextuelle (29), ledit procédé comprenant une étape d'acquisition d'une vidéo par un système d'acquisition (32) parmi un réseau de systèmes d'acquisition (32) répartis sur une paroi externe (19) d'un avion (10), de manière à générer un signal vidéo natif (36), le procédé comprend :
- une étape de fourniture d'au moins une information contextuelle (29) par un module de fourniture d'au moins une information contextuelle du système d'acquisition (32), ou, si le module de fourniture d'au moins une information contextuelle du système d'acquisition (32) perd des signaux de géolocalisation des satellites de géolocalisation ou ne capte plus des signaux d'un réseau de télécommunication terrestre, par le module de fourniture d'au moins une information contextuelle d'un autre système d'acquisition du réseau de systèmes d'acquisition à travers une étape d'échange entre les systèmes d'acquisition du réseau des informations contextuelles acquises par chacun d'eux,
- une étape d'incrustation de l'information contextuelle dans la vidéo, avant toute étape de compression, de manière à obtenir une vidéo enrichie,
- une étape de compression de la vidéo enrichie de manière à générer un signal vidéo enrichie (44),
- une étape de transmission du signal vidéo enrichie vers au moins un écran (28), et
- une étape de visualisation de la vidéo enrichie sur l'écran (28).

2. Aéronef comprenant au moins un dispositif d'acquisition et de visualisation d'au moins une vidéo enrichie d'au moins une information contextuelle, ledit dispositif comprenant un réseau de systèmes d'acquisition (32) répartis sur une paroi externe (19) de l'aéronef, chaque système d'acquisition (32) comportant au moins une caméra (34) configurée pour générer un signal vidéo natif (36), ainsi qu'au moins un écran (28) configuré pour recevoir un signal vidéo enrichie et pour le visualiser, chaque système d'acquisition (32) comprenant un module de fourniture d'au moins une information contextuelle positionné à proximité de la caméra (34), et un module de traitement d'images (42) configuré pour recevoir le signal vidéo natif (36) et l'information contextuelle, les mixer de manière à obtenir un signal vidéo enrichie (44) d'au moins une information contextuelle et compresser ce signal vidéo enrichie (44) de manière à le transmettre à au moins un écran (28) ; le dispositif comprenant également un commutateur réseau (64) auxquels sont reliés les différents systèmes d'acquisition (32) permettant aux systèmes d'acquisition (32) d'échanger leurs informations contextuelles de sorte que si le module de fourniture d'au moins une information contextuelle d'un premier système d'acquisition perd des signaux de géolocalisation des satellites de géolocalisation ou ne capte plus des signaux d'un réseau de télécommunication terrestre, les données manquantes peuvent être fournies par un deuxième système d'acquisition.

3. Aéronef selon la revendication précédente, **caractérisé en ce que** le commutateur réseau (64) comprend un système de régulation (70) d'une alimentation électrique et **en ce que** le dispositif comprend des câbles réseaux (68) reliant le commutateur réseau (64) à chaque système d'acquisition (32) et configurés pour alimenter les différents systèmes d'acquisition (32) en énergie électrique régulée.

4. Aéronef selon l'une des revendications 2 à 3, **caractérisé en ce que** chaque système d'acquisition (32) comprend un module de géolocalisation (38) présentant une antenne (T38), au moins une mémoire (46), configurée pour stocker au moins une information contextuelle.

5. Aéronef selon l'une des revendications 2 à 4, **caractérisé en ce que** chaque système d'acquisition (32) comprend un module de communication (48), présentant une antenne (T48), configuré pour télécharger au moins une information contextuelle.

6. Aéronef selon l'une des revendications 2 à 5, **caractérisé en ce que** chaque système d'acquisition (32) présente un corps (52) creux, contenant la caméra (34) et le module de traitement d'images (42), ainsi qu'une plaque avant (54), solidarisée à une extrémité du corps (52), comportant un bord périphérique formant une collerette tout autour du corps (52) et configurée pour être plaquée contre une face extérieure d'une paroi externe (19) d'un avion, la plaque avant (54) comprenant une ouverture (60) obturée par une optique (62) positionnée en face de la caméra (34).

7. Aéronef selon la revendication précédente, **caractérisé en ce qu'**au moins une antenne (T38, T48) d'un module de géolocalisation (38) et/ou d'un module de communication (48) est intégrée à la plaque avant (54) du système d'acquisition (32), en périphérie de l'ouverture (60) prévue pour l'optique (62).

## Patentansprüche

1. Verfahren zur Erfassung und Anzeige wenigstens eines Videos, das mit wenigstens einer Kontextinformation (29) angereichert ist, wobei das Verfahren einen Schritt der Erfassung eines Videos durch ein Erfassungssystem (32) aus einem Netzwerk von Erfassungssystemen (32) aufweist, die auf einer Außenwand (19) eines Flugzeugs (10) verteilt sind, um ein natives Videosignal (36) zu erzeugen, wobei das Verfahren umfasst:
- einen Schritt der Bereitstellung von wenigstens einer Kontextinformation (29) durch ein Modul zur Bereitstellung von wenigstens einer Kontextinformation des Erfassungssystems (32) oder, wenn das Modul zur Bereitstellung von wenigstens einer Kontextinformation des Erfassungssystems (32) Geolokalisierungssignale von Geolokalisierungssatelliten verliert oder keine Signale von einem terrestrischen Telekommunikationsnetz mehr empfängt, durch das Modul zur Bereitstellung von wenigstens einer Kontextinformation eines anderen Erfassungssystems des Netzes von Erfassungssystemen mittels eines Austauschschrittes von Kontextinformationen zwischen den Erfassungssystemen des Netzes, die von jedem dieser erfasst wurden,
- einen Schritt des Einblendens der Kontextinformation in das Video vor jedem Komprimierungsschritt, um ein angereichertes Video zu erhalten,
- einen Schritt des Komprimierens des angereicherten Videos, um ein angereichertes Videosignal (44) zu erzeugen,
- einen Schritt des Übertragens des angereicherten Videosignals an wenigstens einen Bildschirm (28), und
- einen Schritt des Anzeigens des angereicherten Videos auf dem Bildschirm (28).

2. Luftfahrzeug mit wenigstens einer Vorrichtung zur Erfassung und Anzeige wenigstens eines Videos, das mit wenigstens einer Kontextinformation angereichert ist, wobei die Vorrichtung ein Netz von Erfassungssystemen (32) aufweist, die auf einer Außenwand (19) des Luftfahrzeugs verteilt sind, wobei jedes Erfassungssystem (32) wenigstens eine Kamera (34) aufweist, die dazu eingerichtet ist, ein natives Videosignal (36) zu erzeugen, sowie wenigstens einen Bildschirm (28), der dazu eingerichtet ist, ein angereichertes Videosignal zu empfangen und dieses anzuzeigen, wobei jedes Erfassungssystem (32) ein Modul zur Bereitstellung von wenigstens einer Kontextinformation aufweist, das in der Nähe der Kamera (34) angeordnet ist, und ein Bildverarbeitungsmodul (42) aufweist, das dazu eingerichtet ist, das native Videosignal (36) und die Kontextinformation zu empfangen, diese zu mischen, um ein mit wenigstens einer Kontextinformation angereichertes Videosignal (44) zu erhalten, und dieses angereicherte Videosignal (44) zu komprimieren, um dieses an wenigstens einen Bildschirm (28) zu senden; wobei die Vorrichtung auch einen Netzwerkschalter (64) aufweist, mit dem die verschiedenen Erfassungssysteme (32) verbunden sind und der es den Erfassungssystemen (32) ermöglicht, ihre Kontextinformationen auszutauschen, so dass, wenn das Modul zum Bereitstellen wenigstens einer Kontextinformation eines ersten Erfassungssystems Geolokalisierungssignale von Geolokalisierungssatelliten verliert oder keine Signale von einem terrestrischen Telekommunikationsnetz mehr empfängt, die fehlenden Daten von einem zweiten Erfassungssystem bereitgestellt werden können.

3. Flugzeug nach dem vorhergehenden Anspruch, **dadurch gekennzeichnet, dass** der Netzwerkschalter (64) ein System (70) zur Regelung einer elektrischen Energieversorgung aufweist und dass die Vorrichtung Netzwerkkabel (68) aufweist, die den Netzwerkschalter (64) mit jedem Erfassungssystem (32) verbinden und so eingerichtet sind, dass sie die verschiedenen Erfassungssysteme (32) mit geregelter elektrischer Energie versorgen.

4. Luftfahrzeug nach einem der Ansprüche 2 bis 3, **dadurch gekennzeichnet, dass** jedes Erfassungssystem (32) ein Geolokalisierungsmodul (38) mit einer Antenne (T38) und wenigstens einen Speicher (46) aufweist, der zum Speichern wenigstens einer Kontextinformation eingerichtet ist.

5. Luftfahrzeug nach einem der Ansprüche 2 bis 4, **dadurch gekennzeichnet, dass** jedes Erfassungssystem (32) ein Kommunikationsmodul (48) aufweist, das eine Antenne (T48) umfasst und so eingerichtet ist, dass es wenigstens eine Kontextinformation herunterlädt.

6. Flugzeug nach einem der Ansprüche 2 bis 5, **dadurch gekennzeichnet, dass** jedes Erfassungssystem (32) einen hohlen Körper (52) aufweist, der die Kamera (34) und das Bildverarbeitungsmodul (42) enthält, sowie eine Frontplatte (54), die fest mit einem Ende des Körpers (52) verbunden ist und einen Umfangsrand aufweist, der einen Kragen rund um den Körper (52) bildet und dazu eingerichtet ist, gegen eine Außenseite einer Außenwand (19) eines Flugzeugs gedrückt zu werden, wobei die Frontplatte (54) eine Öffnung (60) aufweist, die von einer Optik (62) verschlossen ist, die gegenüber der Kamera (34) angeordnet ist.

7. Flugzeug nach dem vorhergehenden Anspruch, **dadurch gekennzeichnet, dass** wenigstens eine Antenne (T38, T48) eines Geolokalisierungsmoduls (38) und/oder eines Kommunikationsmoduls (48) in die Frontplatte (54) des Erfassungssystems (32) integriert ist, und zwar am Umfang der Öffnung (60), die für die Optik (62) vorgesehen ist.

## Claims

1. Method for acquiring and displaying at least one video enriched with at least one piece of contextual information (29), said method comprising a step of acquiring a video by means of one acquisition system (32) among a network of acquisition systems (32) distributed over an external wall (19) of an aeroplane (10), so as to generate a native video signal (36), the method comprising:
- a step of delivering at least one piece of contextual information (29) by means of a module for delivering at least one piece of contextual information of the acquisition system (32), or, if the module for delivering at least one piece of contextual information of the acquisition system (32) loses geolocation signals from geolocation satellites or no longer picks up signals from a terrestrial telecommunication network, by means of the module for delivering at least one piece of contextual information of another acquisition system of the network of acquisition systems through a step of exchanging, between the acquisition systems of the network, pieces of contextual information acquired by each thereof,
- a step of embedding the contextual information into the video, before any compressing step, so as to obtain an enriched video,
- a step of compressing the enriched video so as to generate an enriched video signal (44),
- a step of transmitting the enriched video signal to at least one screen (28), and
- a step of displaying the enriched video on the screen (28).

2. Aircraft comprising at least one device for acquiring and displaying at least one video enriched with at least one piece of contextual information, said device comprising a network of acquisition systems (32) distributed over an external wall (19) of the aircraft, each acquisition system (32) comprising at least one camera (34) configured to generate a native video signal (36), and at least one screen (28) configured to receive an enriched video signal and to display it, each acquisition system (32) comprising one module for delivering at least one piece of contextual information, said module being positioned in proximity to the camera (34), and an image-processing module (42) configured to receive the native video signal (36) and the piece of contextual information, to mix them so as to obtain a video signal (44) enriched with at least one piece of contextual information and to compress this enriched video signal (44) so as to transmit it to at least one screen (28), the device also comprising a network switch (64) to which the various acquisition systems (32) are connected, allowing the acquisition systems (32) to exchange their pieces of contextual information so that if the module for delivering at least one piece of contextual information of a first acquisition system loses geolocation signals from geolocation satellites or no longer picks up signals from a terrestrial telecommunication network, the missing data may be delivered by a second acquisition system.

3. Aircraft according to the preceding claim, **characterized in that** the network switch (64) comprises a system (70) for regulating a power supply and **in that** the device comprises network cables (68) that connect the network switch (64) to each acquisition system (32) and that are configured to supply the various acquisition systems (32) with regulated electrical power.

4. Aircraft according to either of Claims 2 and 3, **characterized in that** each acquisition system (32) comprises a geolocation module (38) having an antenna (T38), and at least one memory (46) configured to store at least one piece of contextual information.

5. Aircraft according to one of Claims 2 to 4, **characterized in that** each acquisition system (32) comprises a communication module (48) having an antenna (T48), said module being configured to download at least one piece of contextual information.

6. Aircraft according to one of Claims 2 to 5, **characterized in that** each acquisition system (32) has a hollow body (52), containing the camera (34) and the image-processing module (42), and a front plate (54), which is securely fastened to one end of the body (52), and which comprises a peripheral edge forming a flange all the way around the body (52), and which is configured to be pressed against an exterior face of an external wall (19) of an aircraft, the front plate (54) comprising an aperture (60) that is obturated by an optical system (62) positioned facing the camera (34).

7. Aircraft according to the preceding claim, **characterized in that** at least one antenna (T38, T48) of a geolocation module (38) and/or a communication module (48) is integrated into the front plate (54) of the acquisition system (32), on the periphery of the aperture (60) provided for the optical system (62).
